# EUROPÄISCHE PATENTSCHRIFT

(11) **EP 0 942 857 B1**
(45) Veröffentlichungstag und Bekanntmachung des Hinweises auf die Patenterteilung: **17.12.2003**
(21) Anmeldenummer: 98959715.8
(22) Anmeldetag: 08.10.1998
(51) Int. Cl.: B60S 1/00

(54) **WISCHANLAGE**
WIPER SYSTEM
SYSTEME D'ESSUIE-GLACE

(30) Priorität: 11.10.1997 DE 19745006
(43) Veröffentlichungstag der Anmeldung: 22.09.1999
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: DE9802967
(87) Internationale Veröffentlichungsnummer: WO99019178

(56) Entgegenhaltungen:
- EP-A- 0 012 251
- GB-A- 707 559
- GB-A- 710 360
- GB-A- 1 373 474

## Beschreibung

Die Erfindung betrifft eine Wischanlage, insbesondere für Scheiben von Kraftfahrzeugen, mit den im Oberbegriff des Anspruchs 1 genannten Merkmalen. Eine derartige wischanlage ist aus der GB-A- 707559 bekannt.

### Stand der Technik

Wischanlagen mit wenigstens einem Wischgummi, das über einen Bügel in Anlagekontakt mit der zu wischenden Unterlage gehalten wird, wobei der Bügel mit einem antreibbaren Wischerarm verbunden ist und ein Haltebereich zwischen dem Wischgummi und dem Bügel als Gelenk mit einer in Längsrichtung des Wischgummis verlaufenden Gelenkachse ausgebildet ist, sind beispielsweise in der DE-C-975 208, der GB-A-707,559, der GB-A-710,360 und der GB-A-1,373, 474 offenbart.

Aus diesen Druckschriften ist bekannt, den Kopf des Wischgummis im Querschnitt gesehen geringer zu dimensionieren als einen von dem Bügel umgriffenen Raum. Hierdurch wird erreicht, dass zwischen dem Bügel und dem Wischgummi ein Gelenk ausgebildet ist, dessen Gelenkachse in Längserstreckung des Wischgummis verläuft. Durch diese Anordnung wird es möglich, während der Bewegung des Wischgummis über die Scheibe, infolge einer hierbei am Wischgummi angreifenden Reibkraft, dieses auszulenken, so dass sich eine Schrägstellung zwischen dem Wischgummi, insbesondere einer mit der Oberfläche der Scheibe im Kontakt stehenden Lippe, und der Scheibe ergibt. Hierdurch wird ein gleichmäßigeres Wischbild erzeugt, insbesondere wird hierdurch eine Geräuschentwicklung des über die Scheibe geführten Wischgummis vermieden. Entsprechend der Hin- und Herbewegung zwischen den zwei Umkehrlagen des Wischgummis erfolgt eine entsprechende Umlenkung des Wischgummis in die jeweils andere, der Wischrichtung entgegengesetzte Richtung. Der Grad der Umlenkung des Wischgummis wird durch das Spiel des Wischerblattkopfes innerhalb des von dem Bügel umgriffenen Raums bestimmt. Bei einigen der bekannten Anordnungen ist nachteilig, dass es während des Umklappens, das infolge einer plötzlichen Änderung der Wischrichtung in genau entgegengesetzter Richtung impulsartig erfolgt, zu einer Geräuschentwicklung durch Aufschlagen des Kopfes an dem Bügel kommt. Außerdem weisen die meisten bekannten Anordnungen einen rinnenförmigen Bügel auf, während heutige Bügel gewöhnlich wenigstens eine Kralle, in der Regel mehrere, über die Längserstreckung des Wischgummis im Abstand voneinander angeordnete Krallen besitzen, von denen der Kopf des Wischgummis gehalten wird. Der Kopf des Wischgummis besitzt an diesen Stellen entsprechende Ausnehmungen, in die der Bügel eingreifen kann.

### Vorteile der Erfindung

Die erfindungsgemäße Wischanlage mit den im Anspruch 1 genannten Merkmalen bietet den Vorteil, dass eine Geräuschentwicklung beim Umklappen des Wischgummis vermieden wird. Dadurch, dass einem zwischen dem Wischgummi und dem Bügel ausgebildeten Gelenk wenigstens ein Dämpfungsglied zur Dämpfung der Drehbewegung zugeordnet ist und das Dämpfungsglied in ständigem Anlagekontakt mit dem den Kopf des Wischgummis umgreifenden Bügel steht, sowie dadurch, dass die Dämpfung sofort und unmittelbar mit dem Umkippen des Wischgummis in den Umkehrlagen einsetzt, ist es vorteilhaft möglich, das impulsartige Umklappen des Wischgummis zumindest im Bereich von dessen Kopf zu dämpfen, so dass die Kippbewegung von Beginn an durch die Kraft des Dämpfungsgliedes abgebremst wird. Insbesondere wenn der gesamte Wischgummi aus einem elastischen Material besteht, kann der mit der zu wischenden Scheibe im Anlagekontakt liegende Lippenbereich impulsartig umgeklappt werden, ohne dass diese Drehbewegung unmittelbar auf den Kopf des Wischgummis übertragen wird. Durch die erfindungsgemäße Ausbildung des Dämpfungsgliedes erfolgt eine Kippbewegung des Kopfes mit einer Zeitverzögerung und verlangsamter Impulsenergie, so dass das Aufschlagen des Kopfes auf den den Kopf umfassenden Bügel, und damit die hiermit verbundene Geräuschentwicklung, vermieden wird. Durch die einstückige Ausbildung des Dämpfungsgliedes mit dem Kopf des Wischgummis wird es in einfacher Weise möglich, mittels bekannter Verfahren, beispielsweise Extrudieren elastischer Materialien die Wischgummis mit integriertem Dämpfungsglied auszubilden. Somit ist ein Aufwand zur Ausbildung der Dämpfungsglieder vernachlässigbar klein.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Perspektivansicht eines Teils einer Wischanlage für Kraftfahrzeuge;
- Figuren 2 und 3: eine erfindungsgemäße Ausgestaltung eines Wischblattes in einem ersten Ausführungsbeispiel; und
- Figuren 3 und 4: eine erfindungsgemäße Ausgestaltung eines Wischblattes in einem zweiten Ausführungsbeispiel.

### Beschreibung der Ausführungsbeispiele

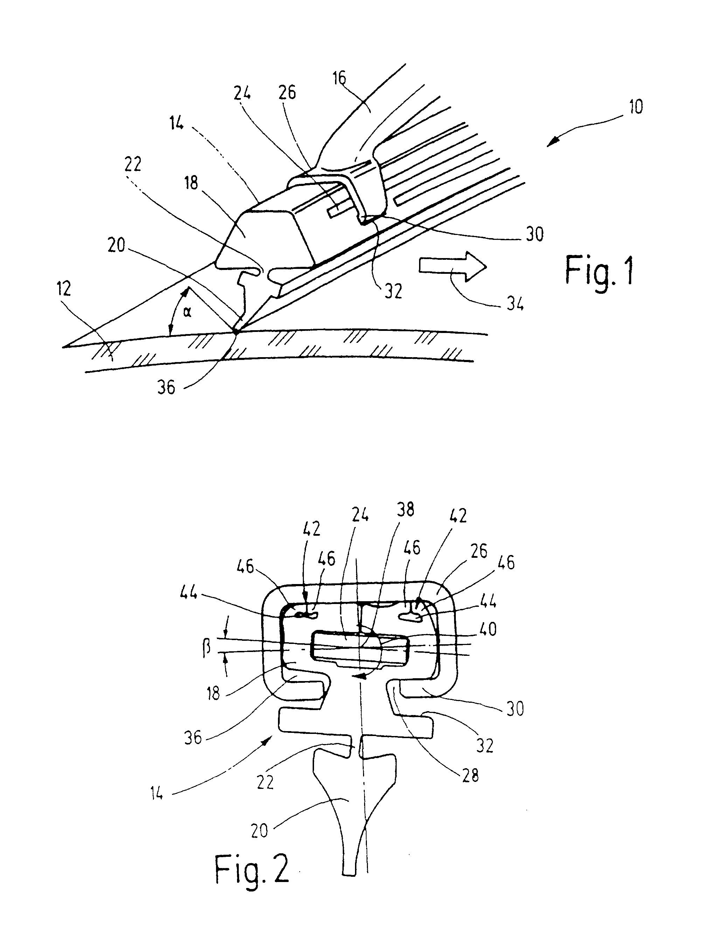

Figur 1 zeigt ausschnittsweise in einer perspektivischen Ansicht eine Scheibenwischanlage 10 zum Wischen einer Scheibe 12 eines Kraftfahrzeuges. Die Scheibenwischanlage 10 ist lediglich in einem Bereich gezeigt, der die Befestigung eines Wischgummis 14 an einem Bügel 16 verdeutlicht. Der Bügel 16 seinerseits ist an einem Wischerarm befestigt, der über einen Antrieb antreibbar ist, so daß der Wischgummi 14 in bekannter Weise eine Hin- und Herbewegung zwischen zwei Umkehrlagen auf der Scheibe 12 ausführt.

Der Wischgummi 14 besitzt einen Kopf 18 sowie eine Lippe 20, die über einen Umlegsteg 22 miteinander verbunden sind. Der Wischgummi 14 besteht aus einem elastischen Material, beispielsweise einem Kautschukgummi. In Längserstreckung des Wischgummis 14 ist wenigstens eine Federschiene 24 angeordnet, die einer Stabilsierung des Wischgummis 14 dient. Die Federschiene 24 kann, wie Figur 1 zeigt, als außenliegende Federschiene oder auch wie die nachfolgenden Figuren zeigen, als innenliegende Federschiene 24 ausgebildet sein. Der Bügel 16 bildet Krallen 26 aus, die von einem im wesentlichen rechteckförmigen oder trapezförmigen Profil gebildet werden, das an seiner dem Bügel 16 abgewandten Seite eine schlitzartige Öffnung 28 (in Figur 1 nicht sichtbar) besitzt. Hierdurch kommt es zur Ausbildung von Greifabschnitten 30, die in nutartige Ausnehmungen 32 des Wischgummis 14 eingreifen.

Während des bestimmungsgemäßen Gebrauchs der Scheibenwischanlage 10 wird der Wischgummi 14 mittels des Bügels 16 über die Scheibe 12 geführt. Hierbei ergibt sich eine momentane Bewegungsrichtung 34 des Wischgummis 14. Die Bewegungsrichtung 34 besitzt hierbei entsprechend der Wischbewegung des Wischgummis 14 entgegengesetzte Richtungsvektoren. Durch die Ausbildung des Wischgummis 14 erfolgt ein Umknicken des Wischgummis 14 entgegengesetzt der Bewegungsrichtung 34. Hierdurch kommt es zur Ausbildung eines Anstellwinkels α zwischen einer Auflagefläche 36 und der Scheibe 12. Der Winkel α beträgt beispielsweise 45°. Hierdurch wird erreicht, daß der Wischgummi 14 über die Scheibe 12 gezogen wird, so daß sich einerseits ein einwandfreies Wischbild ergibt, und andererseits eine geräuscharme Bewegung des Wischgummis 14 möglich ist.

Die Darstellung der Figur 1 erfolgt lediglich zur Verdeutlichung der Funktion des Wischgummis 14. Anhand der nachfolgenden Figuren 2 bis 5 wird die erfindungsgemäße Ausgestaltung des Wischgummis 14 näher erläutert. In den Figuren 2 bis 5 sind jeweils schematische Schnittdarstellungen der Scheibenwischanlage 10 im Bereich einer Kralle 26 des Bügels 16 gezeigt. Insofern sind gleiche Teile mit gleichen Bezugszeichen versehen und nicht nochmals erläutert.

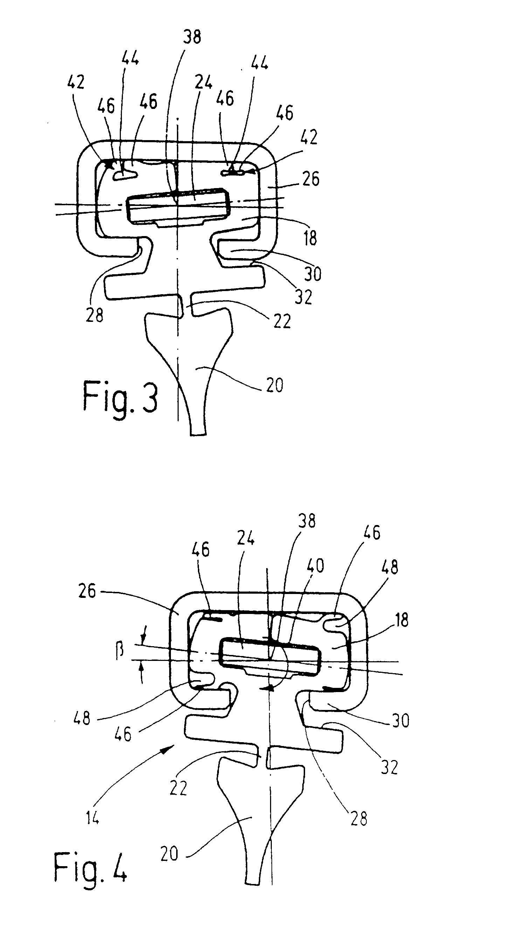

Wie die Schnittdarstellung in Figur 2 und 3 verdeutlicht, ist der Kopf 18 des Wischgummis 14 - im Querschnitt betrachtet - geringer dimensioniert als ein von der Kralle 26 umgriffener Raum 36. Hierdurch kommt es zur Ausbildung eines Freiraumes zwischen der Kralle 26 und dem Kopf 18. Entsprechend der Größe dieses Freiraumes ist der Kopf 18 um seine Längsachse 38 drehbar gelagert, so daß es zur Ausbildung eines Scharniers 40 zwischen dem Kopf 18 und der Kralle 26 kommt. Ein maximaler Drehwinkel β des Scharniers 40 wird hierbei durch die Größe des Freiraums zwischen dem Kopf 18 und der Kralle 26 sowie einer Elastizität des Materials des Wischgummis 14, insbesondere dessen Kopfes 18, bestimmt.

Der Kopf 18 bildet Dämpfungsglieder 42 aus. Diese werden von einen Hohlraum 44 des Kopfes 18 umschließende Lappen 46 gebildet. In dem in Figur 2 und 3 gezeigten Ausführungsbeispiel sind jeweils zwei Lappen 46 vorgesehen, die einstückig mit dem Kopf 18 ausgebildet sind und die den Hohlraum 44 umgreifen. Die Dämpfungsmittel 42 sind in den Eckbereichen des Kopfes 18 ausgebildet, also in einem Bereich, der infolge der Drehung um die Längsachse 38 die größte Wegstrecke zurückzulegen hat. Die Lappen 46 sind so vorgespannt, daß in jeder Lage des Kopfes 18 ein Berührungskontakt mit der Kralle 26 erfolgt. In Figur 2 und Figur 3 sind die beiden möglichen Maximalstellungen des Wischgummis 14 und somit dessen Kopfes 18 gezeigt. Je nach Bewegungsrichtung 34 erfolgt ein Umklappen - wie anhand von Figur 1 erläutert - in die eine beziehungsweise die andere Richtung, jeweils entgegengesetzt der Bewegungsrichtung 34. In den Umkehrlagen des Wischgummis 14 wird die Lippe 20 plötzlich, das heißt impulsartig, durch die Änderung der Bewegungsrichtung 34 umgeklappt. Durch die Verbindung mit dem Kopf 18 über den Umlegesteg 22 wird diese Bewegung auf den Kopf 18 übertragen, so daß der Kopf 18 um die Längsachse 38 verdreht wird. Durch das Anliegen der Lappen 46 an der Kralle 26 üben diese eine Federkraft auf den Kopf 18 aus, die der Drehbewegung um den Winkel β des Kopfes 18 entgegengesetzt ist. Hierdurch wird diese Drehbewegung des Kopfes 18 gedämpft, so daß ein plötzliches Drehen des Kopfes 18 vermieden wird. Dadurch, daß die Lappen 46 jederzeit an der Kralle 26 anliegen, ist ein spielfreies Führen des Wischgummis 14 in dem Bügel 16, insbesondere in dessen Krallen 26, möglich. Je nachdem, in welche Richtung der Wischgummi 14 umklappt, wird die Dämpfung von dem links beziehungsweise rechts dargestellten Dämpfungsglied 42 übernommen.

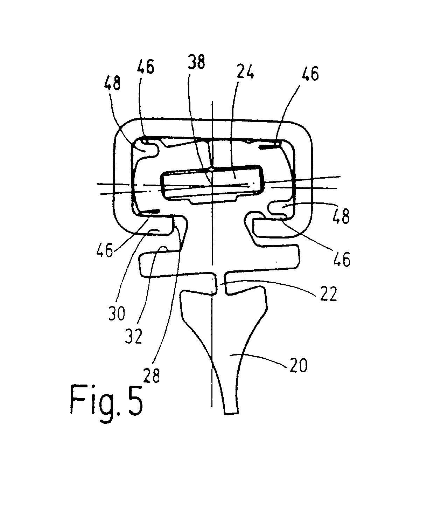

In Figur 4 und 5 ist ein weiteres Ausführungsbeispiel gezeigt, wobei gleiche Teile mit gleichen Bezugszeichen versehen und nicht nochmals erläutert sind. Hier werden die Dämpfungsglieder 42 von ebenfalls vier Lappen 46 gebildet, wobei diese als Einzellappen jeweils in den Eckbereichen, im Querschnitt des Kopfes 18 gesehen, angeordnet sind. Der Hohlraum zwischen dem Kopf 18 und dem Lappen 46 ist hierbei als randoffene Ausnehmung 48 ausgebildet. Die Lappen 46 sind wiederum so vorgespannt, daß diese jederzeit mit der Kralle 26 in Anlagekontakt stehen, so daß der Wischgummi 14 spielfrei geführt ist. Je nach Umkippen des Wischgummis 14 werden sich diagonal gegenüberliegend angeordnete Lappen 46 auf Druck beansprucht, so daß ebenfalls die Drehbewegung des Kopfes 18 gegen eine von den Lappen 46, hier den diagonal gegenüberliegenden Lappen 46, ausgehende Federkraft erfolgen muß. Hierdurch erfolgt eine Dämpfung der Drehbewegung um den Winkel β.

Anhand der gezeigten Ausführungsbeispiele wird ohne weiteres deutlich, daß mittels einfacher Maßnahmen, nämlich den vorzugsweise gemeinsam mit dem Wischgummi 14 ausgebildeten Lappen 46, einerseits eine spielfreie Führung in den Krallen 26 gewährleistet wird und andererseits eine Dämpfung einer infolge des Umklappens erfolgenden plötzlichen Drehbewegung des Kopfes 18 des Wischgummis 14 erfolgt. Je nach Form und/oder Größe der Lappen 46 läßt sich die Größe der Dämpfung einstellen.

Die Erfindung beschränkt sich selbstverständlich nicht auf die dargestellten Ausführungsbeispiele. So ist auch die Anordnung anderer Dämpfungsmittel möglich.

## Patentansprüche

1. Wischanlage, insbesondere für Scheiben von Kraftfahrzeugen, mit wenigstens einem Wischgummi (14), das über einen Bügel (16) in Anlagekontakt mit der zu wischenden Unterlage (12) gehalten wird, wobei der Bügel (16) mit einem antreibbaren Wischarm verbunden ist, und ein Haltebereich zwischen dem Wischgummi (14) und dem Bügel (16) als Gelenk ausgebildet ist, wobei eine Gelenkachse (38) Längsrichtung des Wischgummis (14) verläuft, wobei dem Gelenk wenigstens ein Dämpfungsglied (42) zur Dämpfung einer Drehbewegung des Wischgummis zugeordnet ist, und wobei das Dämpfungsglied (42) in ständigem Anlagekontakt mit dem Bügel (16) steht und eine Kraft auf einen Kopf (18) des wischgummis ausübt, die einer Drehbewegung des Kopfes beim Umkippen des Wischgummis in dessen Umkehrlagen entgegengesetzt ist und eine sofort und unmittelbar mit dem Umkippen einsetzende Dämpfung der Drehbewegung des Kopfes (18) bewirkt, **dadurch gekennzeichnet, dass** das Dämpfungsglied (42) einstückig mit dem Kopf (18) des Wischgummis (14) ausgebildet ist und vorgespannt ist, um seinen ständigen Anlagekontakt mit dem Bügel (26) zu gewährleisten.

2. Wischanlage nach Anspruch 1, **dadurch gekennzeichnet, dass** das Dämpfungsglied (42) von mit dem Kopf (18) verbundenen, federnd gelagerten Lappen (46) gebildet wird.

3. Wischanlage nach einem der vorhergehenden Ansprüche, **dadurch gekennzeichnet, dass** das Dämpfungsglied (42) von zwei, einen Hohlraum (44) des Kopfes (18) umgreifenden Lappen (46) gebildet wird.

4. Wischanlage nach einem der vorhergehenden Ansprüche, **dadurch gekennzeichnet, dass** der Kopf (18) zwei Dämpfungsglieder (42) aufweist, die an einer von einer Lippe abgewandten Seite angeordnet sind.

5. Wischanlage nach Anspruch 1 oder 2, **dadurch gekennzeichnet, dass** das Dämpfungsglied (42) von einem eine randoffene Ausnehmung (48) des Kopfes (18) übergreifenden Lappen (46) gebildet wird.

6. Wischanlage nach Anspruch 5, **dadurch gekennzeichnet, dass** der Kopf (18) vier Dämpfungsglieder (42) aufweist, die jeweils in den Eckbereichen des Kopfes (18) ausgebildet sind.

7. Wischanlage nach einem der vorhergehenden Ansprüche, **dadurch gekennzeichnet, dass** die Dämpfungsglieder (42) in jeder Stellung des Kopfes (18) in Anlagekontakt mit an dem Bügel (16) angeordneten Krallen (26) stehen, die der Halterung des Wischgummis (14) dienen.

## Claims

1. Wiper system, in particular for windows of motor vehicles, having at least one wiper rubber (14) which is kept in bearing contact with the underlying surface (12) to be wiped via a strap (16), the strap (16) being connected to a drivable wiper arm, and a retaining region between the wiper rubber (14) and the strap (16) being designed as a hinge with a hinge axis (38) running in the longitudinal direction of the wiper rubber (14), the hinge being assigned at least one damping element (42) for damping a rotational movement of the wiper rubber, and the damping element (42) being in continuous bearing contact with the strap (16) and exerting a force on a head (18) of the wiper rubber, the said force being opposed to a rotational movement of the head as the wiper rubber tips over into its reversal positions, and brings about a damping of the rotational movement of the head (18) that starts immediately and directly with the tipping over, **characterized in that** the damping element (42) is formed integrally with the head (18) of the wiper rubber (14) and is prestressed in order to ensure its continuous bearing contact with the strap (26).

2. Wiper system according to Claim 1, **characterized in that** the damping element (42) is formed by tabs (46) which are connected to the head (18) and are mounted resiliently.

3. Wiper system according to one of the preceding claims, **characterized in that** the damping element (42) is formed by two tabs (46) which engage around a cavity (44) of the head (18).

4. Wiper system according to one of the preceding claims, **characterized in that** the head (18) has two damping elements (42) which are arranged on a side facing away from a lip.

5. Wiper system according to Claim 1 or 2, **characterized in that** the damping element (42) is formed by a tab (46) which engages over an open-edged recess (48) of the head (18).

6. Wiper system according to Claim 5, **characterized in that** the head (18) has four damping elements (42) which are each formed in the corner regions of the head (18).

7. Wiper system according to one of the preceding claims, **characterized in that** in each position of the head (18), the damping elements (42) are in bearing contact with claws (26) which are arranged on the strap (16) and are used for securing the wiper rubber (14).

## Revendications

1. Installation d'essuie-glace, en particulier pour des pare-brises de véhicules automobiles, avec au moins une lame de caoutchouc (14), maintenue en contact avec le support (12) à essuyer à l'aide d'un étrier (16), l'étrier (16) étant relié à un bras de montage d'essuie-glace pouvant être entraîné et une zone de maintien étant configurée comme articulation entre la lame de caoutchouc (14) et l'étrier (16), un axe d'articulation (38) étant placé dans la longueur de la lame de caoutchouc (14), au moins un élément d'amortissement (42) étant affecté à l'articulation afin d'amortir un mouvement de rotation de la lame de caoutchouc et l'élément d'amortissement (42) se trouvant en contact permanent avec l'étrier (16) en exerçant sur la tête (18) de la lame de caoutchouc, une force opposée à un mouvement de rotation de la tête lors du basculement du caoutchouc de l'essuie-glace dans ses positions inverses et entraînant un amortissement du mouvement de rotation de la tête ( 18) se produisant immédiatement avec le basculement,
**caractérisée en ce que**
l'élément d'amortissement (42) forme un seul bloc avec la tête ( 18) de la lame de caoutchouc (14) et est précontraint afin d'assurer son contact permanent avec l'étrier (26).

2. Installation d'essuie-glace selon la revendication 1,
**caractérisée en ce que**
l'élément d'amortissement (42) est composé de pattes (46) élastiques reliées à la tête (18).

3. Installation d'essuie-glace selon l'une quelconque des revendications précédentes,
**caractérisée en ce que**
l'élément d'amortissement (42) est composé de deux pattes (46) entourant un espace creux (44) de la tête (18).

4. Installation d'essuie-glace selon l'une quelconque des revendications précédentes,
**caractérisée en ce que**
la tête (18) présente deux éléments d'amortissement (42) montés sur une face opposée à une lèvre.

5. Installation d'essuie-glace selon la revendication 1 ou 2,
**caractérisée en ce que**
l'élément d'amortissement (42) est formé d'une patte (46) cherchant une découpe (48) ouverte au bord de la tête (18).

6. Installation d'essuie-glace selon la revendication 5,
**caractérisée en ce que**
la tête (18) présente quatre éléments d'amortissement (42), formés respectivement dans les zones d'angle de la tête (18).

7. Installation d'essuie-glace selon l'une quelconque des revendications précédentes,
**caractérisée en ce que**
les éléments d'amortissement (42) se trouvent dans chaque position de la tête (18) en contact avec des griffes (26) placées sur l'étrier (16) et permettant de maintenir la lame de caoutchouc (14).
